# EUROPÄISCHE PATENTANMELDUNG

(11) **EP 2 329 954 A1**
(43) Veröffentlichungstag der Anmeldung: **08.06.2011**
(21) Anmeldenummer: 10015118.2
(22) Anmeldetag: 30.11.2010
(51) Int. Cl.: B41M 3/00, B32B 38/14

(54) **Verfahren zur Herstellung von Druckprodukten**

(30) Priorität: 03.12.2009 DE 102009056761
(71) Anmelder: Steinemann Technology AG, 9015 St. Gallen (CH)
(72) Erfinder: Walther, Thomas, 9000 St. Gallen (CH)
(74) Vertreter: Arat, Dogan

(57) **Zusammenfassung**

Bei einem Verfahren zur Herstellung eines Druckproduktes, bestehend aus einer Folienbahn (15) und einem Trägermaterial (14), wobei es sich bei der Trägermaterialbahn (14) um ein bahnförmiges Material aus Papier, Karton, Kunststofffolie, metallisierte Kunststofffolie, Aluminiumfolie, Verbundmaterial, Wellpappe oder Metallblech handelt, wobei die bedruckte Folienbahn (13) und das Trägermaterial (14) mittels eines Klebstoffes in einem Kaschierspalt zwischen zwei Walzen (8, 9) unter Druckeinwirkung dauerhaft haftend an den Klebstellen miteinander verbunden werden, so dass diese nach der Aushärtezeit des Klebstoffs nur noch zerstörend voneinander getrennt werden können, mit folgenden Verfahrenschritten,
a. mehrfarbiges Bedrucken der Folienbahn (13) mittels einer oder mehreren Tintenstrahldruckvorrichtungen (2) mit mindestens einem Bild- oder Textmotiv,
b. partielles oder vollflächiges Applizieren des Klebstoffs oder eines Klebefilms mit einer Klebstoffauftragsvorrichtung (6) bzw. einer Klebefilmspendevorrichtung, wobei der Klebstoff bzw. der Klebefilm auf die Druckseite der bedruckten Folienbahn (13) appliziert wird,
c. Umlenken der bedruckten Folienbahn (13) bzw. Zuführen des Trägermaterials (14) derart, dass die Druckseite der bedruckten Folienbahn (13) gegen die Oberfläche des Trägermaterials (14) gerichtet ist, wobei eine gegebenenfalls vorzunehmende Bahnumlenkung der bedruckten Folienbahn (13) vor, während oder nach dem Klebstoff- bzw. Klebefilmauftrag geschehen kann,
d. Verbinden eines Laminats (18) in dem Kaschierspalt zwischen den Walzen (8, 9) unter Druckeinwirkung,
e. Trennung des Laminats (18) in einzelne Drucknutzen oder Druckbogen mit einer Trennvorrichtung (12) oder einer Stanzvorrichtung, wobei der Trenn- bzw. Stanzvorgang "inline", während des Produktdurchlaufs oder "Offline" in einer separaten Vorrichtung geschehen kann.

## Beschreibung

Die vorliegende Erfindung bezieht sich auf ein Verfahren nach dem Oberbegriff des Anspruchs 1 und einer Tintenstrahldruckvorrichtung nach Anspruch 2, sowie ein Druckprodukt nach Anspruch 3.

### Stand der Technik

Nach dem jetzigen Stand der Technik der Dispersionsklebetechnik wird der Klebstoff in den meisten Fällen mittels eines Walzenauftragswerk auf eine oder mehrere Substratlagen vor dem Zusammenfügen des Laminats aufgebracht. Die Dosierung erfolgt dabei durch die die Beistellung zweier oder mehrerer Walzen zueinander oder mit einer Rasterwalze, die Näpfchen aufweist und an der Oberfläche abgerakelt wird. Der Auftrag des Klebstoffes auf die Substratlage bzw. Substratlagen erfolgt bei allen Walzenwerken kontaktierend, d.h. die Auftragswalze des Walzenwerkes steht im Kontakt mit der Substratlage. In den häufigsten Anwendungen werden wasserbasierte Dispersionskleber eingesetzt, da diese kostengünstig und umweltfreundlich sind. Für den Transport wird der Klebstoff mit relativ hohen Anteilen von Wasser verdünnt, so dass der Festkörperanteil oftmals nur 40-50% beträgt. Der Rest bildet das Wasser plus einige Additive. Ein proportional zur eingebrachten Menge des Wasseranteils hoher Energieaufwand ist nach dem Übertragen auf die Substratlage notwendig, damit der aufgetragene Klebstoff seine Klebrigkeit erhält indem eine grosse Menge an Wasser und anderen Lösemittelbestandteilen dem Klebstofffilm entzogen wird.

Polyurethanklebstoffe werden temperiert mit einer Walze auf die Folie vor der Bildung des Laminatverbunds auf die Folie oder das Trägermaterial aufgetragen und reagieren über einen längeren Zeitraum feuchtigkeitsvernetzend aus. Die benötigte Feuchtigkeit kann zugeführt werden. In den meisten Fällen reicht die in Papier- oder Karton vorhandene Feuchtigkeit aus, sofern diese als Trägermaterial eingesetzt werden. Bei Einsatz eines Zweikomponenten - Polyurethanklebstoffes kann auf die Feuchtigkeitsvernetzung verzichtet werden, denn die Härterkomponente übernimmt diese Funktion. Eine Zwitterstellung sind sogenannte Polyurethan-Hotmelts, di e einerseits über die Abkühlung an Klebkraft gewinnen und längerfristig feuchtigkeitsvernetzend aushärten. Polyurethanklebstoffe und andere geeignete Klebstoffe können alternativ zu den Walzenauftragswerken auch mit Breitschlitzdüsen aufgebracht werden.

Bei den UV - Klebern werden radikalisch und nach dem kationischen Mechanismus aushärtbare Systeme eingesetzt. Die radikalische Vernetzungsreaktion findet im Wesentlichen nur statt, wenn die Klebstoffschicht UV - Strahlung ausgesetzt ist, es findet höchstens eine geringe Dunkelreaktion statt. Der Nachteil radikalisch härtender Systeme liegt darin, dass die Härtung der Klebstoffschicht durch die Folie stattfinden muss. Eine bedruckte oder beschichtete Folie wirkt aber wie ein Filter für das UV - Licht, so dass im Wesentlichen nur transparente Folien eingesetzt werden können.

Kationisch härtende Klebstoffsysteme für die Lamination sind jedoch günstiger, da sie nur eine Triggerbestrahlung benötigen und anschliessend ohne weitere Bestrahlung vollkommen aushärten (ausgeprägte Dunkelreaktion). Leider ist ein solcher kationischer Klebstoff ca. fünfmal teurer als entsprechende radikalisch härtende Systeme.

Es ist aus der Patentliteratur ebenso bekannt, dass Folien auf der Aussenseite oder das Trägermaterial in einem Druckverfahren mit einem Bild, Text oder anderen informationen bedruckt sind. So werden in der Bogenlamination der Laminiermaschine bedruckte Bogen zugeführt, die dort mittels Klebstoff mit einer schützenden Folie verbunden werden. Derartige Laminieranlagen werden von der Steinemann Technolgy AG, St. Gallen, Schweiz unter den Markennamen Lotus SF (für die Polyurethanlaminierung) oder Syrius (Wasserlamination) angeboten.

Die DE 103 21 365 A1 offenbart eine mit Digitaldruck bedruckte Kunststofffolie, insbesondere eine Selbstklebefolie, die wiederum nach dem Druck mit einer dünnen Schutzfolie beschichtet wird. Neben den herkömmlichen Drucktechniken wie Hochdruck, Offsetdruck, Siebdruck, Flexodruck und Tiefdruck wird immer häufiger die Digitaldrucktechnik angewandt, denn sie benötigt keine Druckform und kann daher nutzbringend und schnell für Druckauflagen von 1 bis zu einigen Tausend eingesetzt werden. Digitaldrucktechnik ist charakterisiert, dass das Druckbild aus einem digitalen Datenbestand aufgebaut wird, ohne dabei eine Druckform, wie zum Beispiel eine Offsetdruckplatte, einzusetzen. Digitale Drucktechniken haben ferner die Möglichkeit das Druckbild von Druckbild neu aufzubauen und zu variieren. Eine Eigenschaft, die konventionellen, von Druckformen arbeitenden Druckverfahren fehlt. Bekannte digitale Druckverfahren sind der Tintenstrahldruck, der Xerographische oder elektrophotographische Druck, Thermotransferdruckverfahren und andere.

Ferner ist es bekannt, dass unterschiedliche Papiere und Kartonsorten unterschiedliche Eignungsprofile für Inkjetdrucke haben. Diese Eigenschaftsprofile erfordern einerseits unterschiedliche Colorprofile in der Vorstufe, um den Farbausdruck an den durch die Papiereigenschaften beeinflussten Farbraum anzupassen. Bei sehr hochwertigen Drucken führt dies dazu, dass Papiere mit einer dünnen Rezeptorschicht bedruckt werden, die Papiere und Karton sehr verteuern. Einen guten Überblick über geeignete Inkjet-Rezeptor Schichten bietet die DE 60 2007 000 011 T2.

Es ist daher offensichtlich, dass der Inkjetdruck auf Papier oder andere faserhaltige Bedruckstoffe Nachteile in ökologischer und ökonomischer Art bietet. Ein standardisiertes Drucken ist auf verschiedenen Substraten nur eingeschränkt möglich. Ziel der Erfindung ist es diese Limitationen des Inkjetdrucks zu lösen.

Die Aufgabe der Erfindung ist es ein Einfaches, ökonomisches und standardisiertes System zur Herstellung eines im Digitaldruckverfahren hergestellten Druckproduktes zu etablieren.

Das gemäss der Erfindung hergestellte Druckprodukt stellt ein Laminat aus einer bedruckten Folie und einem Trägermaterial dar, wobei Folie und Trägermtaterial mittels eines Klebstoffs dauerhaft miteinander verbunden werden.

Für das Verbinden zweier Lagen zu einem Laminat sind unter anderem das Dispersionskleben, das Verbinden mit feuchtigkeitsvernetzenden Kleber (z.B. Einkomponenten - Polyurethankleber), mit Zweikomponenten - Klebersystemen (z.B. Zweikomponenten - Polyurethankleber) oder mit strahlenhärtenden Klebstoffsystemen (z.B. UV-Kleber auf kationischer oder radikalischer Basis) bestens bekannt.

Als Schutz- bzw. Laminierfolie kann eine Vielzahl von Folien eingesetzt werden, wie zum Beispiel Polyester-, OPP-, Acetat- oder andere geeignete Kunststoffolien. Aus der ganzen Menge der Kunststoffolien kann fast jede Folie zu Schutzzwecken herangezogen werden. Neben den Kunststoffolien werden auch vermehrt Folien aus Biokunststoffen auf modifizierter Stärkebasis, Zellulosebasis oder anderen nachwachsenden pflanzlichen Rohstoffbasen eingesetzt.

Die Folien können dabei hochglänzend, matt, semimatt oder auch mit einer Oberflächenstrukturierung ausgestattet sein.

Das Tintenstrahldruckwerk besteht aus einer Vielzahl an einer geeigneten Stelle neben- und gegebenenfalls hintereinander angeordneten Druckköpfen, wobei jeder Druckkopf wieder eine große Anzahl einzelner Düsen aufweisen kann, aus denen die Tinte oder der Beschichtungsstoff auf den Bedruckstoff aufgespritzt wird.

Tintenstrahldrucker können auf der Ventiltechnik (Valve - Technik) beruhen. Einer solches Drucksystem besteht im wesentlichen aus einem Tinten-System, indem die Tinte oder der Beschichtungsstoff unter geringem Druck gehalten wird, einer elektronischen Steuerung und einem Druckkopf, der meist über flexible Leitungen mit den übrigen Teilen verbunden ist. Die Tinte oder der Beschichtungsstoff wird von dem Tintensystem zu dem Druckkopf transportiert und versorgt dort die Düse bzw. die Düsen. Diese Düsen sind wiederum mit einfachen Ventilen ausgestattet, die sich öffnen und schließen lassen. Wird ein Tropfen benötigt, öffnet die Elektronik das Ventil und die Tinte wird unter Druck herausgedrückt.

Die andere Gruppe der Tintenstrahldrucker beruht auf der Impulstechnik. Hierbei werden zwei Technologien unterschieden: Die Piezotechnologie und die Bubble-Jet Technologie.

Bei der Piezo-Technologie wird die Tinte oder der Beschichtungsstoff unter geringem Druck in die Düse geführt, dass die Tinte oder der Beschichtungsstoff nur durch die Oberflächenspannung in der Düse zurückgehalten wird. Wird ein Tropfen benötigt, wird Spannung an ein Piezokristall in der Düse angelegt. Dadurch biegt bzw. verformt sich das Kristall, reduziert das Volumen des Hohlraums und ein Tropfen wird aus der Düse geschleudert. Das Piezo-Kristall nimmt dann wieder seine ursprüngliche Form an. Die Kräfte der Oberflächenspannung ziehen mehr Tinte oder Beschichtungsstoff aus dem Tintenvorrat, um die Düse wieder aufzufüllen.

Bei der Bubble-Jet Technologie wird eine elektrische Spannung an zwei Pole gelegt. Als Ergebnis des Widerstands zwischen den Polen entsteht soviel Hitze, dass eine Dampfblase erzeugt wird. Während die Blase sich ausdehnt, schleudert sie einen Tintentropfen aus der Düse. Wenn die Spannung nicht mehr an den Polen anliegt, fällt die Blase in sich zusammen. Durch die Oberflächenspannung füllt sich die Düse wieder mit Tinte bzw. Beschichtungsstoff.

Die drei Technologien Valve - Tintenstrahldruck, Piezo - Tintenstrahldruck und Bubble - Jet werden im Sinne der Erfindung durch den Begrifft Tintenstrahldruck oder Inkjet subsumiert.

Inkjetdrucke auf Papier haben den Nachteil, dass sich die Druckfarbe und die darin enthalten Pigmente sehr eng mit den Papier- oder Kartonfasern verbinden. Um die immer niedrigeren Auftragsmengen mit den sehr kleinen Inkjetdüsen- Durchmesser zu gewährleisten, müssen die Pigmente in einer Inkjetdruckfarbe sehr klein gewählt werden. Die kleine Pigment-Teilchengrösse führt dazu, dass diese Pigmente im Recycling nicht mehr in dem Floatingverfahren aus dem Papierbrei entfernt werden können und sich somit in dem Altpapier agglomerieren. Dagegen können Folien sehr gut in Siebverfahren aus dem Altpapierbrei entfernt werden.

Durch dieses Vorgehen kann sehr standardisiert gedruckt werden, wenn standardisierte Folientypen eingesetzt werden. Das Trägermaterial kann dabei fast ein beliebiger Papier, Karton oder anderes Material sein, ohne dass das Tintenstrahlverfahren darauf abgestimmt werden muss. Das Druckbild ist auch geschützt, da die Druckbildseite gegen das Trägermaterial laminiert wird, und somit weitere Veredelungsschritte, wie eine Schutz- und / oder Glanzlackierung eingespart werden können. Mit diesem Verfahren können somit in einem Arbeitsgang ein komplettes Produkt erstellt werden, das eine hochwertige Anmutung und einen guten Schutz des Druckbildes aufweist. Die vollständige Herstellung eines Druckproduktes in zwei Arbeitsschritten (Bedrucken der Folie, Laminieren der Folie gegen das Trägermaterial) wiegt kostenmässig vollständig die höheren Kosten einer Folienlamination gegenüber einer Lackierung auf.

### Figurenbeschreibung

Die Erfindung enthält zwei Ausführungsbeispiele:
**Figur 1****:** Laminiervorrichtung mit Tintenstrahlvorrichtung für die Rolle- / Rolle - Lamination
**Figur 2****:** Laminiervorrichtung mit Tintenstrahlvorrichtung für die Rolle- / Bogen Lamination

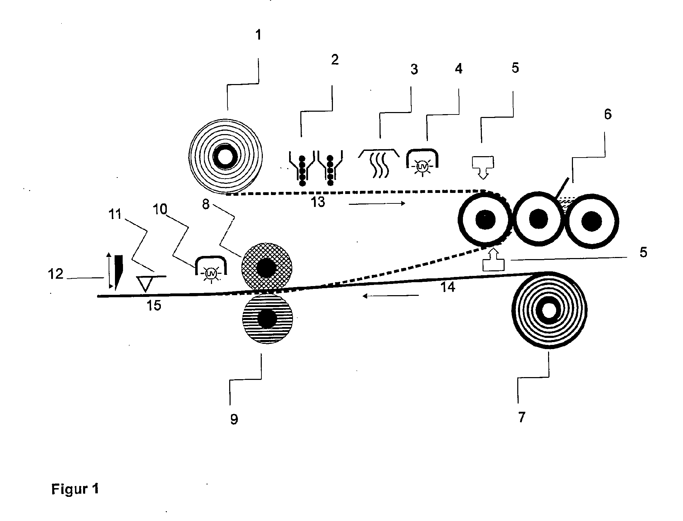

In der in Figur 1 schematisch dargestelltem ersten Ausführungsbeispiel, wird eine Folienbahn von einer Folienrolle (1) abgewickelt und mit einem Tintenstrahlvorrichtung (2) mit Druckbilder und/oder dekorativen Elementen und/oder Texten bedruckt, wobei die Tintenstrahldruckvorrichtung eine Tintenstrahldruckvorrichtung mit einem kontinuierlichen Tintenstrahl oder eine Drop- on- Demand Tintendruckvorrichtung sein kann. Das Druckbild wird anschliessend, falls erforderlich, getrocknet (Wasser- oder Lösemittelbasierte Tinten) oder mit UV - Strahlung gehärtet (UV - härtbare Tinten). Alternativ kann die Folie auch eine Tintenaufnahmebeschichtung haben, die aufgrund ihrer Porosität die Tinte aufnimmt und daher eine anschliessende Trocknung bzw. Härtung überflüssig macht.

Auf die Druckbildseite der Folie (5) wird anschliessend mit einer Klebstoffauftragsvorrichtung (6) ein Klebstoff aufgebracht, der dazu dient die Folie später mit dem Trägermaterial (7) zu einem Laminat (15) zu verbinden. Die Klebstoffauftragsvorrichtung (6) kann dabei ein Walzenauftragswerk, eine Auftragsdüse, zum Beispiel eine Breitschlitzdüse, eine Sprühdüse oder jede andere geeignete Auftragsvorrichtung sein.

Die Erfindung beruht im wesentlichen darauf, dass eine transparente Kunststoff- oder Biokunststofffolie, im Folgenden einfach unter dem Begriff Folie subsumiert, von einer Folienrolle (1) abgewickelt und als endlose Bahn unter einer Tintenstrahldruckstation (2) hindurchgeführt und dort mit Bild- und/oder Textinformationen bedruckt wird. Das Druckbild wird anschliessend, sofern erforderlich mit Infrarot- (3) und gegebenenfalls Konvektionstrockner (3) getrocknet oder im Falle einer strahlenhärtenden Druckfarbe mit einem UV - Trockner (4) gehärtet. Die Druckbildseite (5) wird mit einem Klebstoffauftragswerk(6) mit einem feuchtigkeitsvernetzenden Klebstoff (z.B. Polyurethan- oder Polyurethanhotmelt) oder einem radikalisch oder kationisch härtenden strahlenhärtenden Klebstoff beschichtet und mit der Druckbildseite (5) gegen ein Trägermaterial (14) in einem Kaschierspalt, der zwischen einer Kaschierwalze (8) und Gegendruckwalze (6) gebildet wird, unter Einwirkung von Druck und gegebenenfalls Wärme zu einem Laminat (15) verbunden.

Alternativ oder ergänzend zu der zuvor aufgeführten Kleberapplikationsverfahren kann der Klebstoff mit den zuvor aufgeführten Auftragsvorrichtungen auch auf das Trägermaterial aufgetragen werden.

Der Klebstoff kann dabei ein Dispersionsklebstoff, eine Polyurethankleberstoff, ein Hotmeltklebstoff (z.B. ein Polyurethan-Hotmelt), ein kationisch oder radikalisch härtender UV - Kleber oder ein Klebefilm sein, der von einer Spendevorrichtung auf die Folie- und / oder das Trägermaterial aufgetragen wird.

Das Trägermaterial (15) und die bedruckte Folie werden einem Kaschierspalt, gebildet aus einer Kaschierwalze (8) und einer Gegendruckwalze (9), zugeführt, wo die beiden Lagen unter Druckeinwirkung miteinander zu einem Laminat verbunden werden. Vor dem Kaschierspalt wird die bedruckte Folienlage so umgelenkt, dass sie mit dem Druckbild (5) und gegebenenfalls der Klebschicht gegen die Oberfläche des Trägermaterials laminiert wird. Die Umlenkung kann mit einer beliebigen Ausführungsform einer Umlenkwalze geschehen.

Im Falle, dass ein kationisch oder radikalisch härtender UV - Klebstoff eingesetzt wird, wird die Klebstoffschicht noch mit einem UV - Strahler (10) gehärtet.

Das Druckbild des Laminats wird mit mindestens einem Sensor (11) abgetastet, der Druckbildbestandteile oder Druckmarken abtastet. Die mit dem Sensor (11) bzw. den Sensoren gewonnenen Signale werden dann dazu verwendet, eine Trennvorrichtung (12) zu steuern, die das bahnförmige Laminat wieder in einzelne Bögen aufteilt. Die Trennvorrichtung (12) kann ein rotierendes Messer, ein Heisstrenmmesser mit beheizten Schneiden, eine Lasertrennvorrichtung, ein Wasserstrahlschneidevorrichtung oder eine Schneidebalken oder jede andere geeignete Trennvorrichtung sein, die aus einem bahnförmigen Laminat wieder Bogen machen kann.

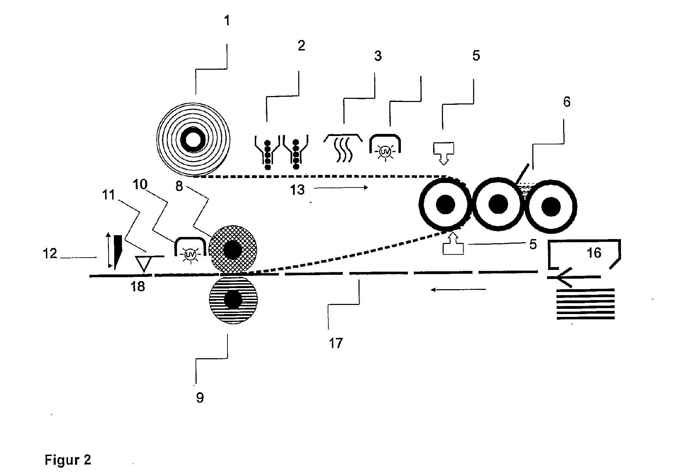

Die zweite Ausführungsform (Figur 2) unterscheidet sich von der ersten Ausführungsform nur dadurch, dass anstatt eines Bahnförmigen Trägermaterials bogenförmige bzw. tafelförmige Trägermaterialien eingesetzt werden.

Die bogenförmigen Materialien können dabei leicht überlappend, Stoss and Stoss oder voneinander beabstandet dem Kaschierspalt zugeführt werden, der aus der Kaschierwalze (8) und der Gegendruckwalze (9) gebildet wird. Sie werden in einer Anlegevorrichtung (18) von einem Stapel entnommen und der Maschine zugeführt oder als Einzelbogen auf eine Fördereinrichtung aufgelegt.

Der Verbund (18) aus der bahnförmigen Folie mit dem bogenförmigen Material muss nicht vollständig durchgetrennt werden. Es ist ausreichend die Folie an den Kontaktstellen der einzelnen Bogen zu trennen. Es können neben den im Ausführungsbeispiel 1 aufgeführte Trennvorrichtungen noch Reissvorrichtungen (Reisswalze) eingesetzt werden. Die Folie muss hiefür nur an den Kontaktstellen verletzt werden, zum Beispiel mit einer Diamantwalze oder einem so genannten Schwabbelmesser.

Bahnförmigen Trägermaterialien können aus Papier, Karton, Kunststoff- oder Biokunststofffolien, Haftpapiere, metallisierte Folien, Metallfolien, Metallbleche oder Laminate aus verschiedenen Stoffen sein.

Bogenförmige Trägermaterialien können Glas, Metalltafeln, Papier, Karton, Wellpappe, Haftetikettenpapier und Kunststoffplatten sein.

Mi dieser Erfindung wird ein einstufiges Produktionsverfahren etabliert, dass eine kostengünstige und schnelle Herstellung eines Druckprodukts erlaubt.

Das in dem Verfahren hergestellte Druckprodukt kann ein Vorprodukt einer Faltschachtel sein, die später oder direkt in dem Produktionsfluss auf dem Bogen oder aus der Bahn ausgestanzt, ausgeschnitten oder in einer anderen Form hergestellt wird. Das Vorprodukt ist ein Laminat aus der bedruckten Folie und einer mit einem faserbasierten Kartonmaterial.

Das in dem Verfahren hergestellte Druckprodukt kann ein Vorprodukt einer Aufstell- oder Verkaufsdisplay sein, die später oder direkt in dem Produktionsfluss auf dem Bogen oder aus der Bahn ausgestanzt, ausgeschnitten oder in einer anderen Form hergestellt wird. Das Vorprodukt ist ein Laminat aus der bedruckten Folie und einer mit einem faserbasierten Karton- bzw. Wellpappenmaterial.

Das in dem Verfahren hergestellte Druckprodukt kann ein Vorprodukt einer Wellpappeverpackung sein, die später oder direkt in dem Produktionsfluss auf dem Bogen oder aus der Bahn ausgestanzt, ausgeschnitten oder in einer anderen Form hergestellt wird. Das Vorprodukt ist ein Laminat aus der bedruckten Folie und einer mit einem offenen oder geschlossenen Wellpappematerial.

Das in dem Verfahren hergestellte Druckprodukt kann ein Vorprodukt einer Haftetikette sein, die später oder direkt in dem Produktionsfluss auf dem Bogen oder aus der Bahn ausgestanzt, ausgeschnitten oder in einer anderen Form hergestellt wird. Das Vorprodukt ist ein Laminat aus der bedruckten Folie und einer mit einem Klebstoff beschichteten Haftetikettenmaterial.

Das in dem Verfahren hergestellte Druckprodukt kann ein Vorprodukt einer Metallverpackung sein, die später oder direkt in dem Produktionsfluss auf dem Bogen oder aus der Bahn ausgestanzt, ausgeschnitten oder in einer anderen Form hergestellt wird. Das Vorprodukt ist ein Laminat aus der bedruckten Folie und einer Metalltafel.

Das in dem Verfahren hergestellte Druckprodukt kann eine beschichtete Glasplatte sein, die aus einem Laminat der bedruckten Folie und der Glasplatte besteht.

Das in dem Verfahren hergestellte Druckprodukt kann eine Faser- oder Holzplatte sein, die aus einem Laminat der bedruckten Folie und der Faser- bzw. Holzplatte besteht.

Das Herstellungsverfahren ist nicht auf die aufgeführten Druckprodukte beschränkt, sondern universell anwendbar, sofern ein Laminat aus einer bedruckten Folie und einem Trägermaterial gebildet wird.

Dies zeigt auch die hohe Flexibilität des Herstellungsverfahrens, ohne dass der Tintenstrahldruck auf verschiedene Materialien adaptiert werden muss.

Bei dem Trägermaterial kann es sich um ein bahnförmiges Material aus Papier, Karton, Kunststofffolie, Aluminiumfolie, Verbundmaterial, eine Wellpappenbahn oder Metallblech handeln. Schmid- und Standvorrichtungen, sowie Kleber oder Tintenstrahldrucker müssen entsprechend eingestellt sein.

### Bezugszeichenliste

- 1: Folienrolle
- 2: Tintenstrahldruckvorrichtung
- 3: Wärme- bzw. Konfektionstrockner
- 4: UV - Härtungseinrichtung
- 5: Druckseite
- 6: Klebstoffauftragsvorrichtung
- 7: Rolle Trägermaterial
- 8: Kaschierwalze
- 9: Gegendruckwalze
- 10: UV - Härtungseinrichtung
- 11: Sensor bzw. Sensoren
- 12: Trennvorrichtung
- 13: Folienbahn
- 14: Trägermaterialbahn
- 15: Bahnförmiges Laminat
- 16: Anlegevorrichtung
- 17: Bogenstrom
- 18: Laminat aus bedruckter Folienbahn und Einzelbogen

## Patentansprüche

1. Verfahren zur Herstellung eines Druckproduktes, bestehend aus einer Folienbahn (15) und einem Trägermaterial (14), wobei es sich bei der Trägermaterialbahn (14) um ein bahnförmiges Material aus Papier, Karton, Kunststofffolie, metallisierte Kunststofffolie, Aluminiumfolie, Verbundmaterial, Wellpappe oder Metallblech handelt, wobei die bedruckte Folienbahn (13) und das Trägermaterial (14) mittels eines Klebstoffes in einem Kaschierspalt zwischen zwei Walzen (8, 9) unter Druckeinwirkung dauerhaft haftend an den Klebstellen miteinander verbunden werden, so dass diese nach der Aushärtezeit des Klebstoffs nur noch zerstörend voneinander getrennt werden können,
**gekennzeichnet durch folgende Verfahrenschritte,**
a. mehrfarbiges Bedrucken der Folienbahn (13) mittels einer oder mehreren Tintenstrahldruckvorrichtungen (2) mit mindestens einem Bild- oder Textmotiv,
b. partielles oder vollflächiges Applizieren des Klebstoffs oder eines Klebefilms mit einer Klebstoffauftragsvorrichtung (6) bzw. einer Klebefilmspendevorrichtung, wobei der Klebstoff bzw. der Klebefilm auf die Druckseite der bedruckten Folienbahn (13) appliziert wird,
c. Umlenken der bedruckten Folienbahn (13) bzw. Zuführen des Trägermaterials (14) derart, dass die Druckseite der bedruckten Folienbahn (13) gegen die Oberfläche des Trägermaterials (14) gerichtet ist, wobei eine gegebenenfalls vorzunehmende Bahnumlenkung der bedruckten Folienbahn (13) vor, während oder nach dem Klebstoff- bzw. Klebefilmauftrag geschehen kann,
d. Verbinden eines Laminats (18) in dem Kaschierspalt zwischen den Walzen (8, 9) unter Druckeinwirkung,
e. Trennung des Laminats (18) in einzelne Drucknutzen oder Druckbogen mit einer Trennvorrichtung (12) oder einer Stanzvorrichtung, wobei der Trenn- bzw. Stanzvorgang "inline", während des Produktdurchlaufs oder "Offline" in einer separaten Vorrichtung geschehen kann.

2. Tintenstrahldruckvorrichtung zur Verwendung in einem Verfahren nach Anspruch 1, **gekennzeichnet dadurch, dass** es sich bei der Tintenstrahldruckvorrichtung (2) um eine "̋Continious Inkjet", eine "Dropon-Demand" Tintenstrahlvorrichtung oder eine Piezo- oder Bubble-Jet Tintenstrahlkopf oder eine andere geeignete Tintenstrahlvorrichtung (2) handelt, wobei diese Tintenstrahldruckvorrichtung aus einem einzelnen Tintenstrahlkopf aufgebaut sein kann, der sich über die gesamte Druckbreite erstreckt oder um mehrere Tintenstrahldruckköpfe handeln kann, die in einer Anordnung neben und/oder hintereinander über die gesamte Druckbreite erstrecken.

3. Druckprodukt, hergestellt nach dem Verfahren nach Anspruch 1, **dadurch gekennzeichnet, dass** es sich um eine Faltschachtel oder ein Vorprodukt einer Faltschachtel handelt, die aus dem Laminat (18) aus der Folienbahn (13) und der Trägermaterialbahn (14) herausgestanzt und/oder herausgeschnitten ist, wobei die Trägermaterialbahn (14) ein Faltschachtelkarton oder ein Kunststoffmaterial zur Herstellung einer Faltschachtel ist.

4. Druckprodukt nach Anspruch 3, **gekennzeichnet dadurch, dass** es sich um eine Wellpappeverpackung, ein Wellpappedisplay, ein Verkaufsdisplay oder ein Vorprodukt der genannten Ausführungen ist, das aus dem Laminat (18) aus der bedruckter Folienbahn (13) und der Trägermaterialbahn (14) herausgestanzt und/oder herausgeschnitten ist, wobei das Trägermaterial mindestens eine Wellpappenlage aufweist.

5. Druckprodukt nach einem der Ansprüche 3 oder 4, **gekennzeichnet dadurch, dass** es sich um eine Metallverpackung, wie zum Beispiel eine Metalldose, oder ein Vorprodukt einer Metallverpackung handelt, oder um ein Metallblech handelt, das aus dem Laminat (18) aus der bedruckter Folienbahn (13) und dem Trägermaterial (14) herausgestanzt und/oder herausgeschnitten ist, wobei das Trägermaterial (14) mindestens eine Metalllage aufweist.

6. Druckprodukt nach einem der Ansprüche 3 bis 5, **gekennzeichnet dadurch, dass** es sich um eine Etikette oder eine Haftetikette oder ein Vorprodukt einer solchen Etikette handelt, die aus dem Laminat aus bedruckter Folie und Trägermaterial herausgestanzt und/oder herausgeschnitten ist.

7. Druckprodukt nach einem der Ansprüche 3 bis 6, **gekennzeichnet dadurch, dass** es sich um ein Verbund aus einer bedruckten Folie und einer Glasscheibe handelt.

8. Druckprodukt nach einem der Ansprüche 3 bis 7, **gekennzeichnet dadurch, dass** es sich um ein Verbund aus einer bedruckten Folie und einer Holz- oder Faserplatte handelt.
